# EUROPEAN PATENT APPLICATION

(11) **EP 4 550 045 A1**
(43) Date of publication of application: **07.05.2025**
(21) Application number: 23942625.7
(22) Date of filing: 26.10.2023
(51) Int. Cl.: G03B 15/03

(54) **LIGHTING SYSTEM**

(30) Priority: 21.09.2023 CN 202322565028 U
(71) Applicant: Tomra Recycling Technology (Xiamen) Co., Ltd., Xiamen, Fujian 361006 (CN)
(72) Inventor: HE, Chunjian, Xiamen, Fujian 361006 (CN); ZHU, Yongyang, Xiamen, Fujian 361006 (CN)
(74) Representative: Chung, Hoi Kan
(86) International application number: PCT/CN2023/126651
(87) International publication number: WO 2025/060177

(57) **Abstract**

Provided is a lighting system, comprising a imaging housing. A support is provided inside the imaging housing for placing a bottle; a camera is provided above the support, and a imaging light source is provided on each of two sides of the camera; and a mirror baffle is provided at a position between the camera and the imaging light source for limiting and shielding marginal rays of the imaging light source at the side close to the camera from illuminating the bottle and thereby reflecting the said marginal rays to the sides of the camera, so as to prevent a shadow produced on the support by the illumination of the imaging light source on a boundary of the bottle body be captured by the camera. By providing two sets of imaging light sources and mirror baffles, shadows of rays illuminating the bottle cannot be captured by or reflected to the camera.

## Description

### TECHNICAL FIELD

The utility model relates to the technical field of lighting devices, in particular to a lighting system.

### BACKGROUND

Currently, more and more reverse vending machines for beverage bottles on the market adopt artificial intelligence and machine vision to identify the types and sizes of bottles. This method often requires relatively clear background and better lighting environment to avoid the impact of light, shadow, and highlight on identification. Conventional arrangement of single lighting fixtures produces a shadow of the bottle, which will affect the determination on the actual size of the bottle. In addition, conventional arrangement of light sources is prone to mirror reflection on the bottle, which will affect the identification on the actual features of the bottle.

### SUMMARY

To solve the above problems, the objective of the utility model is to provide a lighting system, which is provided with two sets of imaging light sources and mirror baffles, so that a shadow of projection of rays of the imaging light sources illuminating a bottle to a support cannot be captured by a camera, and the rays illuminating the bottle cannot be directly reflected to the camera.

The utility model is implemented by the following method: A lighting system includes a imaging housing, where a support is provided inside the imaging housing for placing a bottle; a camera is provided above the support inside the imaging housing, and a imaging light source is provided on each of two sides of the camera inside the imaging housing; and a mirror baffle is provided at a position between the camera and the imaging light source inside the imaging housing for limiting and shielding marginal rays of the imaging light source at the side close to the camera from illuminating the bottle, and thereby reflecting the said marginal rays to the sides of the camera, so as to prevent a shadow produced on the support by the illumination of the imaging light source on a body boundary of the bottle be captured by the camera.

Preferably, two sets of imaging light sources are symmetrically arranged on two sides of the camera, the distance between the two sets of imaging light sources is L4, the diameter of the bottle is D, and L4>D.

Preferably, two mirror baffles are symmetrically arranged along an axis of the camera, an angle between the mirror baffle and a vertical direction is α, and α=3° to 10°.

Preferably, the width of the shadow produced on the support by the projection of a boundary of the bottle body illuminated by rays of the two sets of imaging light sources after reflected by the corresponding mirror baffles is L2, the width of projection of the boundary of the bottle viewed by the camera to the support is L3, the width of the shadow produced on the support by the illumination of the two sets of imaging light sources on the boundary of the bottle body is L1, L2<L3, and L1<L3.

Preferably, the surface of each of two side walls in the imaging housing is covered with a diffuse reflection layer.

Preferably, the support is a conveyor belt, and a center line of the conveyor belt and the axis of the camera are in the same vertical plane.

Preferably, the conveyor belt is V-shaped.

Beneficial effects of the utility model are as follows: The utility model provides a lighting system. Compared with the prior art, the utility model has at least the following technical effects: 1. By providing two sets of imaging light sources and providing mirror baffles to reduce the illumination range of the imaging light sources on the side close to the camera, the reflection angle of illumination faces two sides of the camera, rays illuminating a bottle cannot be directly reflected to the camera and can be prevented from affecting the identification on the actual features of the bottle; the two sets of imaging light sources are arranged on two sides of the camera, so that the projection of the boundary of the bottle illuminated by the two sets of imaging light sources on the support is smaller than the projection of the boundary of the bottle identified by the camera on the support, and the shadow produced on the support by the rays of the imaging light sources illuminating the bottle cannot be captured by the camera to avoid affecting the determination on the actual size of the bottle. 2. The distance between the two sets of light sources is greater than the diameter of the bottle, so that the projection of the boundary of the bottle illuminated by the imaging light on the support is within the side boundary of the vertical projection of the bottle, which can better ensure that the camera cannot capture the shadow of the bottle. 3. That the support is a conveyor belt can improve the efficiency of production, and the V-shaped conveyor belt can achieve automatic aiming of bottles, which enables the camera to accurately capture the actual features of each bottle.

### BRIEF DESCRIPTION OF THE DRAWINGS

FIG. 1 is a schematic structural diagram of a lighting system of the utility model.
FIG. 2 is a schematic structural diagram of the lighting system of the utility model from a first perspective.
FIG. 3 is a schematic structural diagram of the lighting system of the utility model from a second perspective.
FIG. 4 is a schematic diagram of illumination of imaging light sources of the lighting system of the utility model.
FIG. 5 is a schematic diagram showing that virtual light sources illuminate the boundary of a bottle in the lighting system of the utility model.
FIG. 6 is a schematic diagram showing that a camera captures the boundary of a bottle in the lighting system of the utility model.

Reference numerals: 1 - imaging light source, 11 - diffuse reflection layer, 2 - imaging housing, 3 - support, 4 - bottle, 5 - camera, 6 - mirror baffle, 7 - virtual light source, 8 - reflected ray, 9 - inner light source boundary line, 10 - virtual light source illumination boundary.

### DETAILED DESCRIPTION

Further explanation of the utility model will be provided below in conjunction with the accompanying drawings and specific embodiments.

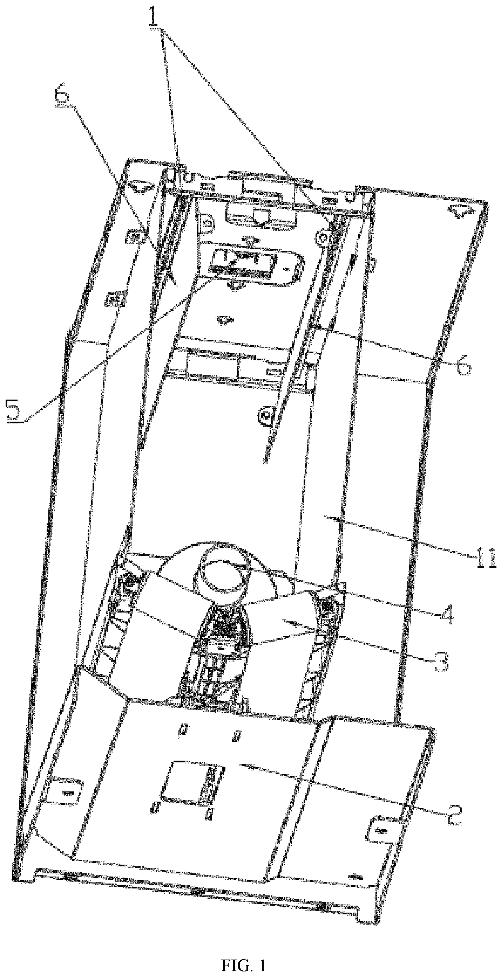

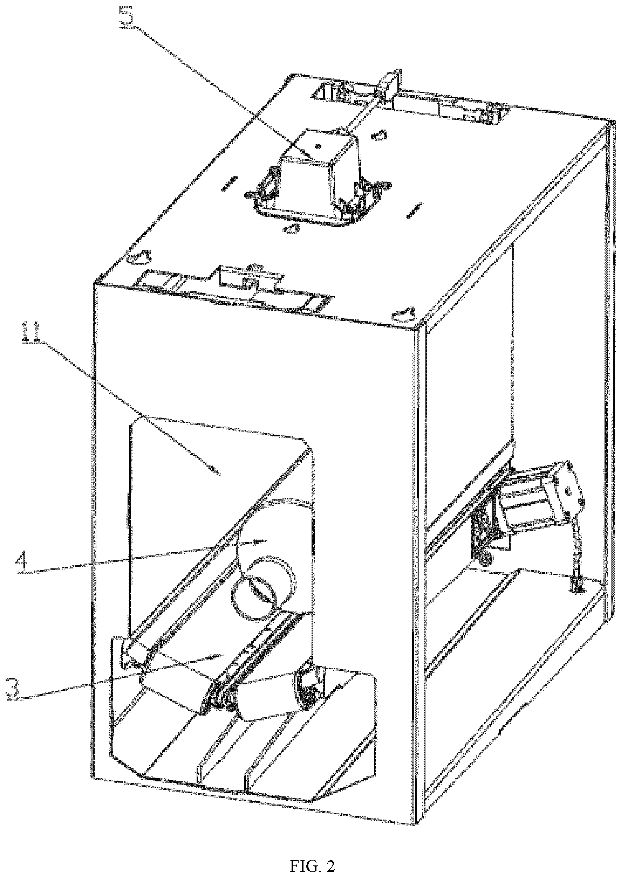

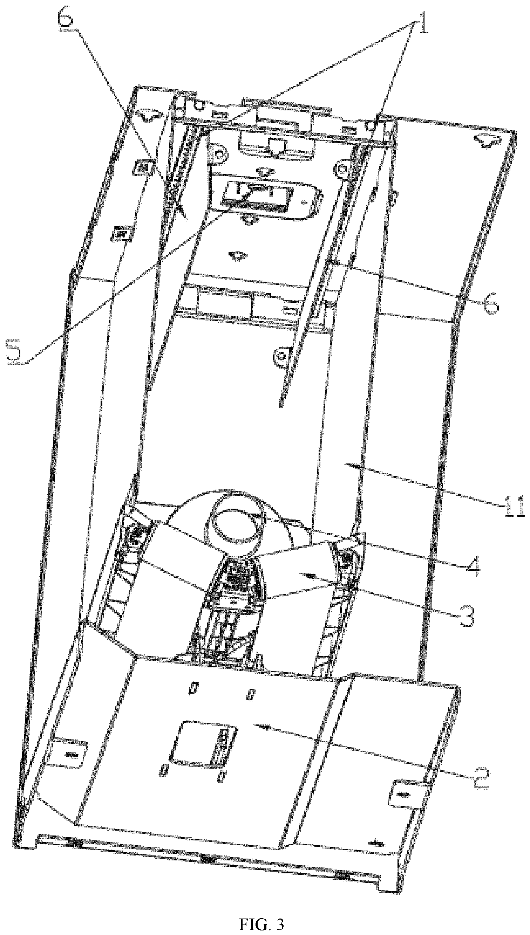

With reference to FIGs. 1 to 6, a lighting system includes a imaging housing 2, and a support 3 is provided inside the imaging housing 2 for placing a bottle 4; a camera 5 is provided above the support 3 inside the imaging housing 2, and a imaging light source 1 is provided on each of two sides of the camera 5 inside the imaging housing 2; and a mirror baffle 6 is provided between the camera 5 and the imaging light source 1 inside the imaging housing 2 for limiting and shielding marginal rays of the imaging light source 1 at the side close to the camera 5 from illuminating the bottle 4 and thereby reflecting the said marginal rays to the sides of the camera 5, so as to prevent a shadow produced on the support 3 by the illumination of the imaging light source 1 on a boundary of the bottle 4 body be captured by the camera 5. By providing two sets of imaging light sources 1 and providing mirror baffles 6 to reduce the illumination range of the imaging light sources 1 on the side close to the camera 5, the reflection angle of the illuminated bottle 4 faces two sides of the camera 5, and reflected rays 8 formed by the illumination, on the bottle 4, of inner light source boundary lines 9 of the imaging light sources 1 shielded by the mirror baffles 6 cannot be directly reflected to the camera 5 and can be prevented from affecting the identification on the actual features of the bottle 4. The two sets of imaging light sources 1 are arranged on two sides of the camera 5, so that the projection of the boundary of the bottle 4 illuminated by the two sets of imaging light sources 1 on the support 3 is smaller than the projection of the boundary of the bottle 4 identified by the camera 5 on the support 3, and the shadow produced on the support 3 by the rays of the imaging light sources 1 illuminating the bottle 4 cannot be captured by the camera 5 to avoid affecting the determination on the actual size of the bottle 4. Preferably, the imaging light sources may be other lighting devices such as light bars or light strips, and are not limited thereto.

With reference to FIGs. 1 to 6, preferably, two sets of imaging light sources 1 are symmetrically arranged on two sides of the camera 5, the distance between the two sets of imaging light sources 1 is L4, the diameter of the bottle 4 is D, and L4>D. The distance between the two sets of light sources is greater than the diameter of the bottle 4, so that the projection of the boundary of the bottle 4 illuminated by the imaging light on the support 3 is within the side boundary of the vertical projection of the bottle 4. In this case, the camera 5 above the bottle 4 cannot capture, via the boundary of the bottle 4, shadows produced by the illumination of the imaging light sources 1 on the bottle 4.

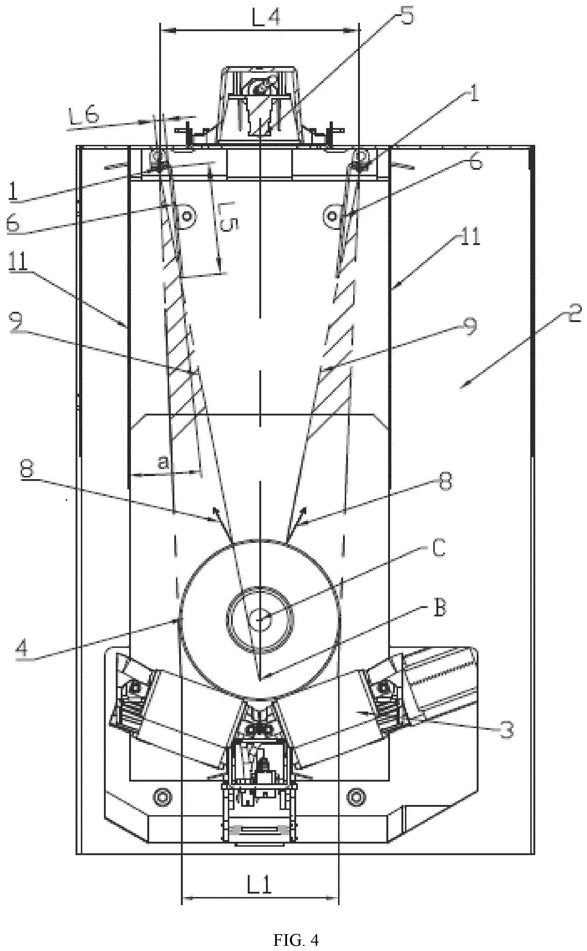

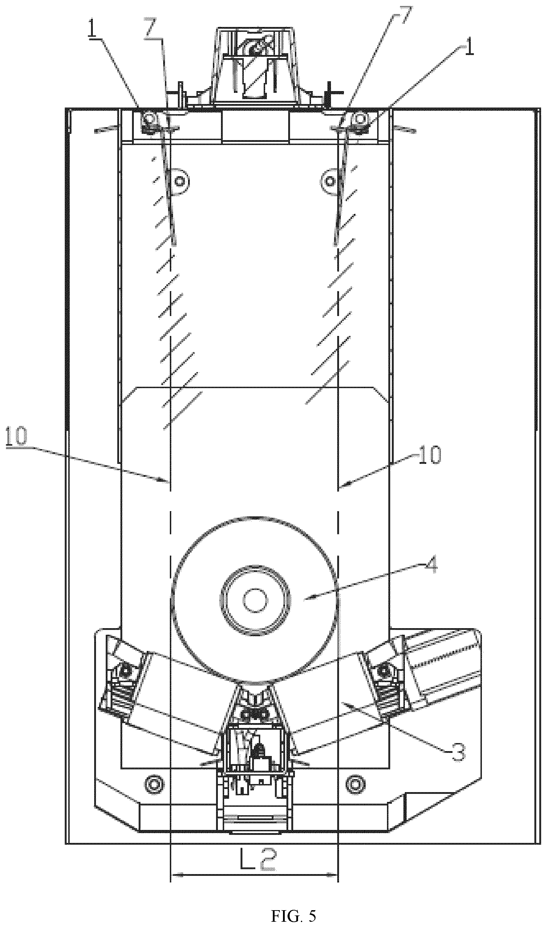

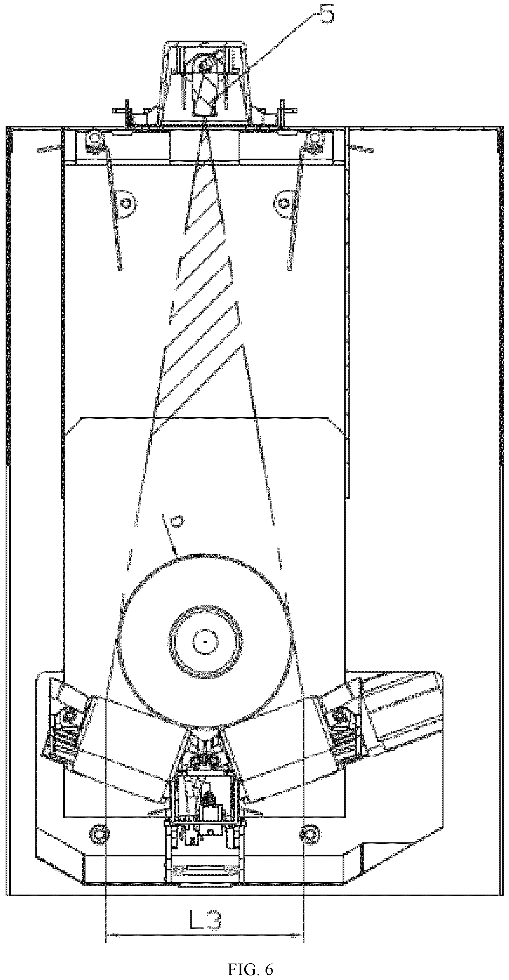

With reference to FIGs. 1 to 6, preferably, the width of the shadow produced on the support 3 by the projection of the body boundary of the bottle 4 illuminated by rays of the two sets of imaging light sources 1 after reflected by the corresponding mirror baffles 6 is L2 (as shown in FIG. 5), the width of projection of the boundary of the bottle 4 viewed by the camera 5 to the support 3 is L3 (as shown in FIG. 6), the width of the shadow produced on the support 3 by the illumination of the two sets of imaging light sources 1 on the body boundary of the bottle 4 is L1 (as shown in FIG. 4), L2<L3, and L1<L3. Preferably, the two mirror baffles 6 are symmetrically arranged along an axis of the camera 5, an angle between the mirror baffle 6 and a vertical direction is α (as shown in FIG. 4), and α=3° to 10°. The light reflected to the camera 5 from the light of the imaging light source 1 reflected by the mirror baffle 6 when illuminating the bottle 4 will be reflected in advance by the corresponding mirror baffle 6, to form a virtual light source 7 that mirrors the real imaging light source 1 under the action of the mirror baffle 6, and the width L2 of the shadow produced on the support 3 by the illumination of the virtual light sources 7 on two sides on virtual light source illumination boundaries 10 of the boundary of the bottle 4 is less than the width L3 of projection of the boundary of the bottle 4 viewed by the camera 5 to the support 3, which can ensure that the camera 5 will not capture the shadow of the bottle 4 on the support 3 and prevent the shadow from affecting the determination on the actual size of the bottle 4. The angle α is controlled within a reasonable range, so that the light of the virtual light source 7 may illuminate on the bottle to produce a shadow that cannot be captured by the camera, or will not illuminate on the bottle. The length L5 of the mirror baffle is controlled within a reasonable range to ensure that the illumination range of the imaging light source 1 on the side close to the camera can be reduced, thereby avoiding direct reflection of light to the camera 5, achieving illumination on the bottle 4, and avoiding shielding the camera 5 from capturing a boundary path of the bottle. By increasing the length L5 of the mirror baffle 6, the illumination of the imaging light source 1 towards an upper middle position on the surface of the bottle 4 can be limited, and vice versa, the imaging light source 1 can illuminate a more middle position on the surface of the bottle 4; by reducing the mounting angle α of the mirror baffle 6, the imaging light source 1 can illuminate the surface of the bottle 4 further away from the middle position, and vice versa, the imaging light source 1 can illuminate the surface of the bottle 4 closer to the middle position; and by shortening the distance L6 between the center of the imaging light source 1 and the mirror baffle 6, the imaging light source 1 can illuminate the surface of the bottle 4 further away from the middle position, and vice versa, the imaging light source 1 can illuminate the surface of the bottle 4 closer to the middle position. By any of the above methods, the reflected rays 8 of the imaging light source 1 illuminating on the surface of the bottle 4 can be prevented from being directly reflected to the camera 5. As long as the intersections B between the side boundaries of the light sources 1 on two sides of the camera 5, shielded by the mirror baffles 6, and the axis of the camera 5 are below the axis C of the bottle, it can be ensured that the reflected rays 8 illuminating on the bottle 4 will not be directly reflected to the camera 5.

With reference to FIGs. 1 to 6, preferably, the surface of each of two side walls in the imaging housing 2 is covered with a diffuse reflection layer 11, which is conducive to improving the brightness in the imaging housing 2 and does not produce a shadow on the support 3 that is illuminated on the bottle 4 and can be captured by the camera 5.

With reference to FIGs. 1 to 6, preferably, the support 3 is a conveyor belt, and a center line of the conveyor belt and the axis of the camera 5 are in the same vertical plane. The conveyor belt is V-shaped. That the support 3 is a conveyor belt can improve the efficiency of identification on a plurality of bottles 4, and the V-shaped conveyor belt can achieve automatic aiming of the bottles 4, which enables the camera 5 to accurately capture the actual features of each bottle 4. The support 3 may also be other components that can provide support and positioning.

The utility model has the following working principle:
Two sets of imaging light sources 1 are provided on two sides of the camera 5, so that the projections of the boundary of the bottle 4 illuminated by the two sets of imaging light sources 1 on the support 3 are smaller than the projection of the boundary of the bottle 4 identified by the camera 5 on the support 3 (that is, the shadow produced on the support 3 by the illumination of the imaging light sources 1 on the bottle 4 is within the projection of the bottle 4 identified by the camera 5 at the boundary), then the shadow produced on the conveyor belt by the rays of illumination of the imaging light sources 1 on the bottle 4 cannot be captured by the camera 5, and the lighting system hides the shadow of the bottle 4 relative to the camera 5 to achieve a shadowless effect, which can prevent the shadow from affecting the determination of the camera 5 on the actual size of the bottle 4.

The mirror baffles 6 are configured to reduce the illumination range of the imaging light sources 1 on the side close to the camera 5, so that the reflection angle of the illuminated bottle 4 faces two sides of the camera 5, the reflected light formed when inner light source boundary lines 9 of the imaging light sources 1 shielded by the mirror baffles 6 illuminate on the bottle 4 cannot be directly reflected to the camera 5, and the imaging light sources 1 produce a shadow only under the same side as the bottle 4 (will not produce a shadow on the other side of the bottle 4 when shielded by the mirror baffles 6), which can prevent the shadow from affecting the identification on the actual features of the bottle 4.

The following should be noted: First, in the description of the present application, unless otherwise specified and defined, the terms "mounted", "connected", and "connection" should be understood in a broad sense, for example, the "connection" may be mechanical or electrical connection, internal communication between two components, or direct connection; the terms "up", "down", "left", "right", etc. are only used for indicating relative positional relationships; and when the absolute position of a described object changes, the relative positional relationship may change.

Second, in the accompanying drawings of the disclosed embodiments of the utility model, only the structures related to the disclosed embodiments are mentioned, and other structures can refer to the usual design; and the same embodiment and different embodiments of the utility model can be combined with each other on a non-conflict basis

Finally, described above are only the preferred embodiments of the utility model, the scope of protection of the utility model is not limited to the above embodiments, and any technical solution under the concept of the utility model falls within the scope of protection of the utility model.

It should be pointed out that, for those of ordinary skill in the art, many improvements and modifications can be made without departing from the principle of the utility model, and these improvements and modifications should also be considered within the scope of protection of the utility model.

## Claims

1. A lighting system, comprising an imaging housing, wherein a support is provided inside the imaging housing for placing a bottle; a camera is provided above the support inside the imaging housing, and an imaging light source is provided on each of two sides of the camera inside the imaging housing; and a mirror baffle is provided at a position between the camera and the imaging light source inside the imaging housing for limiting and shielding marginal rays of the imaging light source at the side close to the camera from illuminating the bottle, and thereby reflecting the said marginal rays to the sides of the camera, so as to prevent a shadow produced on the support by the illumination of the imaging light source on a boundary of the bottle body be captured by the camera.

2. The lighting system according to claim 1, wherein two sets of imaging light sources are symmetrically arranged on two sides of the camera, the distance between the two sets of imaging light sources is L4, the diameter of the bottle is D, and L4>D.

3. The lighting system according to claim 1, wherein two mirror baffles are symmetrically arranged along an axis of the camera, an angle between the mirror baffle and a vertical direction is α, and α=3° to 10°.

4. The lighting system according to claim 1, wherein the width of the shadow produced on the support by the projection of the boundary of the bottle body illuminated by rays of the two sets of imaging light sources after reflected by the corresponding mirror baffles is L2, the width of proj ection of the boundary of the bottle viewed by the camera to the support is L3, the width of the shadow produced on the support by the illumination of the two sets of imaging light sources on the body boundary of the bottle is L1, L2<L3, and L1<L3.

5. The lighting system according to claim 1, wherein the surface of each of two side walls in the imaging housing is covered with a diffuse reflection layer.

6. The lighting system according to claim 1, wherein the support is a conveyor belt, and a center line of the conveyor belt and the axis of the camera are in the same vertical plane.

7. The lighting system according to claim 6, wherein the conveyor belt is V-shaped.
